# EUROPEAN PATENT APPLICATION

(11) **EP 3 167 986 A1**
(43) Date of publication of application: **17.05.2017**
(21) Application number: 15380047.9
(22) Date of filing: 16.11.2015
(51) Int. Cl.: B23B 47/28

(54) **DRILL BIT GUIDING TOOL FOR A DRILLING MACHINE FOR REPAIRING HOLES**

(71) Applicant: Airbus Operations S.L., 28906 Getafe-Madrid (ES)
(72) Inventor: Casas, Diego Ignacio Sánchez, 28906 Madrid (ES)
(74) Representative: Alfaro Martinez, Jose Antonio

(57) **Abstract**

Drilling machine bit guiding tool for repairing holes in parts and comprising a drill bit guiding element (3), comprising a through hole (33) with a pilot bushing through which the drilling machine's bit passes, and an element for fixing (4) it to the part with the hole to be repaired, comprising a variable length slot (5) designed to fit at least one grip or clamp, the tip of which rests in an existing hole; each leg of the grip or clamp rests either side of the slot and the fixing element (4) is connected to the drill bit guiding element (3) by joining elements (7) located at a joining point, the position of which can be changed with regards to the drill bit guiding element (3).

## Description

### FIELD OF THE INVENTION

This invention relates to a tool to be used in hole repair processes, more specifically within the field of auxiliary tools for repairing holes in places that are complicated to repair, and particularly for repairing holes in any area of an aircraft.

### STATE OF THE ART

A large quantity of different types of drilling machines currently exists that allow holes to be drilled in a guided manner for the incorporation of rivets or bolts for joining a range of parts.

Improved drilling machines are used for manufacturing in the aeronautical industry, with more precise bits, new materials, automatic and semiautomatic tools and control systems, such as laser control systems, that allow more precise work to be done, increasing the quality of the final part.

There is, however, a major need to design fast and effective drilling tools that allow holes to be drilled in a manner that is agile for the operator and with a lower margin of error. Currently, the most common faults in the drilling process are uncoordinated, inclined, duplicated and ovalized holes with a range of quality failures, involving an increased risk of holes suffering cracks caused by strain.

On occasion, the use of templates for drilling or hole repair leads to faults caused by the incorrect positioning of the drilling template, incorrect dimensioning and distances shorter than the required minimum distance from the edge of the part.

Auxiliary drilling machine bit guiding tools currently exist, such as those described in US3804546, US5590986 and US4256420, which describe drilling guides. However, these cannot be used to repair exiting holes when the part fixing point is far away from the repair point and is not aligned, thus limiting the type of affected holes that can be repaired.

Similarly, several operators tend to be required for installing the tool to the part with the hole to be repaired.

### DESCRIPTION OF THE INVENTION

To provide a solution to the objections and inconveniences encountered to date in hole repair processes in the aeronautical industry, a description can be found below of a drilling machine bit guiding tool for hole repair, as described in claim 1.

The drilling machine bit guiding tool for hole repair in parts comprises a drill bit guiding element, comprising a through hole with a pilot bushing through which the drilling machine's bit passes, and an element for fixing it to the part with the hole to be repaired, comprising a variable length slot configured to fit at least one grip or clamp, the tip of which rests in an existing hole; each leg of the grip or clamp rests either side of the slot and the fixing element is connected to the drill bit guiding element by joining elements located at a joining point, the position of which can be changed with regards to the drill bit guiding element.

This allows the guiding tool to be fixed to points far away from, and out of alignment with the hole to be repaired, as the drill bit guiding element and the fixing element to the part with the hole to be repaired can be displaced relatively to each other and in a direction perpendicular to the drill bit movement direction. The length of the fixing element can also be adjusted.

The fixing part can comprise two parts; the first is flat and has a "U" shape, joined by joining elements, at two variable position fixing points, to a second flat "U" shaped part. Both are delimited by an internal slot designed so that a fixing grip or clamp can be fitted to the inside; the tip of the grip or clamp rests in an existing hole and each of its legs rests on either side of the slot.

### BRIEF DESCRIPTION OF THE FIGURES

Descriptions of figures corresponding to the preferred construction of the invention are as follows:
Figure 1 is a perspective view of the invented tool.
Figure 2 is a side view of the invention.
Figure 3 is a top view of the invention.
Figures 4A, 4B and 4C show the different possible positions of the invented tool.
Figure 5 shows a top view of part 2 of the part used to fix [the invention] to the part with the drill hole to be repaired.
Figure 6 shows a top view of part 1 of the part used to fix [the invention] to the part to be drilled.
Figure 7 shows a top view of the drill bit guiding part.

### DETAILED DESCRIPTION OF THE INVENTION

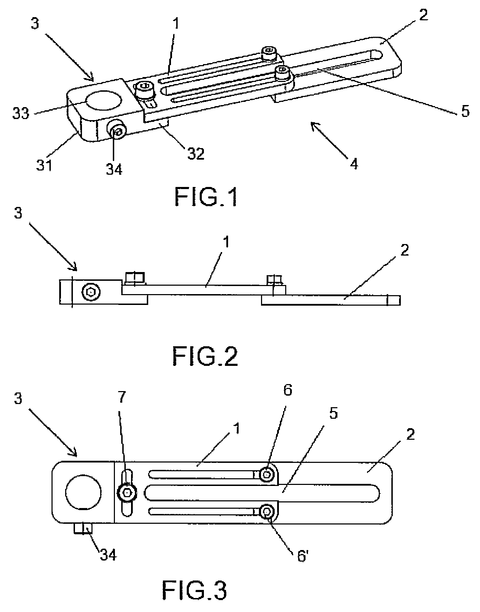

As shown in figures 1-7, the drilling machine bit guiding tool for repairing drill holes comprises a bit guiding part or element (3), which comprises a through hole (33) for housing a pilot bushing to allow the drilling machine bit to pass through, and a fixing part or fixing element to the part with the hole to be repaired (4), comprising a variable length slot (5) configured to fit fixing elements to the part with the hole to be repaired, such as grips or clamps can be fitted.

As shown in figures 1-3 and figure 7, the bit guiding element (3) comprises an area with greater thickness (31), comprising a through hole (33) configured to house a pilot bushing for the bit of the drilling machine, with a bit pilot bushing fixing bolt (34) fitted to the through hole, and a thinner flat area (32), to which the fixing element (4) to the part with the hole to be repaired is fitted, in this particular case the first flat part (1), using the joining elements (7).

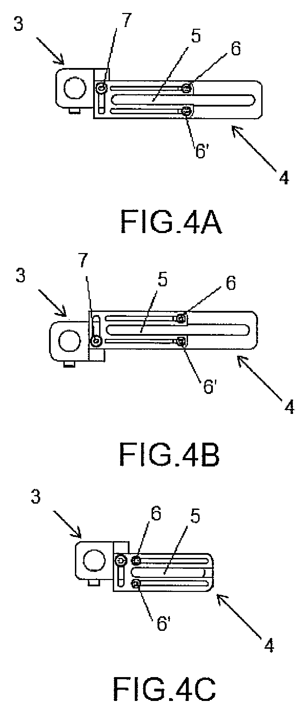

As shown in figures 4A, 4B and 4C, the fixing element (4) to the part with the hole to be repaired comprises two joined parts delimited by a slot (5): a first flat part with a "U" shape (1) and a second flat part with a "U" shape (2), both joined by joining elements with variable position fixing points (6, 6'), with two variable position fixing points; both parts are delimited by an internal slot (5) designed to allow a fixing grip or clamp to be fitted, the tip of which rests in an existing hole and each leg of the grip or clamp rests on either side of the slot.

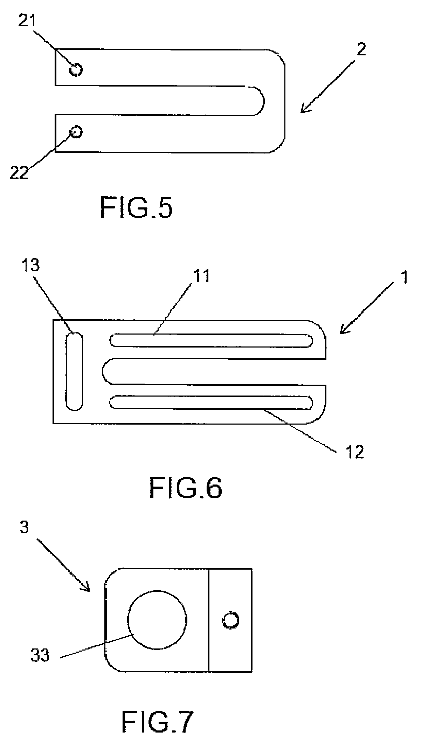

As shown in figure 6, the first flat part (1) has a "U" shape and comprises a first slot (11) and a second slot (12), each placed on each leg of the "U" configuration, designed to allow joining elements (6, 6') to the second part (2), such as bolts, to be fitted. These joining elements (6, 6') can be fixed to any point along the length of slots one (11) and two (12), thereby creating variable joining points.

The first flat part (1) also comprises a third slot (13), located where the two legs of the "U" shape come together, and is configured to house joining parts (7) to the drill bit guiding element (3), such as bolts, which can be fixed to any point along the length of the slot (13), allowing a variable position along the length of the third slot (13).

As shown in figure 5, the second flat part (2) has a "U" shape and comprises two holes (21, 22), each of which located at each end of the legs of the "U", to allow this part to be fixed to the first part (1) using bolts as joining elements (6, 6').

In figures 4A and 4B it can be seen how the fixing element to the part with the hole to be repaired (4) has different positions with respect to the bit guiding element (3) to which it is joined, allowing to fix the tool and allowing to repair the holes to be repaired, which corresponds to the hole in the drill bit guiding element, in points that are not in line with the tool fixing point, thereby providing more usage options.

Figures 4B and 4C show how the fixing element (4) formed by the join between the first flat part (1) and the second flat part (2) using two joining elements (6, 6'), are located at variable joining points along the length of the first and second slots (11, 12) of the first part (1) of the fixing element (4), such as to allow the slot (5) to be longer or shorter depending on the distance between the fixing point, to which the clamp placed in the slot (5) can be fixed, and the hole to be repaired.

Therefore, if an existing hole is far away from the hole to be repaired, the second part (2) is moved in relation to the first part (1) such that the fixing point is located at the end of the "U" shaped legs of the first flat part (1), allowing the slot (5) to be lengthened. A longer slot (5) gives more usage versatility for the aforementioned cases where an existing hole, used as a fixing point for clamps fitted in the slot (5), is located far away from the hole to be repaired.

## Claims

1. Drilling machine bit guiding tool for repairing holes in parts comprising a drill bit guiding element (3), comprising a through hole (33) with a pilot bushing through which the drilling machine's bit passes, and a fixing element for fixing (4) it to the part with the hole to be repaired, **characterized in that** the fixing element (4) to the part with the hole to be repaired comprises a variable length slot (5) configured to fit at least one grip or clamp, the tip of which rests in an existing hole and each leg of the grip or clamp rests either side of the slot and **in that** the fixing element (4) is connected to the drill bit guiding element (3) by joining elements (7) located at a joining point, the position of which can be changed with regards to the drill bit guiding element (3).

2. Drilling machine bit guiding tool according to claim 1, **characterized in that** the fixing element (4) to the part with the hole to be repaired comprises a first flat part with a "U" shape (1) and a second flat part with a "U" shape (2), both joined by joining elements (6, 6') at two variable position fixing points wherein both parts are delimited by an internal slot (5).

3. Drilling machine bit guiding tool according to claim 2, **characterized in that** the first flat part (1) comprises a first slot (11) and a second slot (12), each of which are located on each leg of the "U" configuration, each slot (11, 12) configured to house elements used to join the first part (6, 6') to the second part (2), with variable fixing points along the length of the first slot (11) and second slot (12).

4. Drilling machine bit guiding tool according to claims 2 and 3, **characterized in that** the first flat part (1) comprises a slot (13) located where the two legs of the "U" configuration come together, and is configured to house joining elements (7) to the drill bit guiding element (3), using bolts with variable positions along the length of the slot (13), located where the two legs of the first "U" shaped part (1) meet.

5. Drilling machine bit guiding tool according to claims 3 or 4, **characterized in that** the second "U" shaped flat part (2) comprises two holes (21, 22), each located at each end of the legs of the "U", fixed to the first part (1) by bolts.

6. Drilling machine bit guiding tool according to the aforementioned claims, **characterized in that** the drill bit guiding element (3) comprises a thicker area (31), comprising a through hole (33) configured to house a drill bit pilot bushing, with a drill bit fixing bolt (34), and a thinner flat area (32) to which the fixing element (4) to the part with the hole to be repaired is fitted.
